# EUROPÄISCHE PATENTSCHRIFT

(11) **EP 2 941 403 B1**
(45) Veröffentlichungstag und Bekanntmachung des Hinweises auf die Patenterteilung: **02.08.2017**
(21) Anmeldenummer: 14706257.4
(22) Anmeldetag: 07.01.2014
(51) Int. Cl.: B67D 7/64, B67D 7/84

(54) **FÖRDERVORRICHTUNG**
CONVEYING DEVICE
DISPOSITIF DE REFOULEMENT

(30) Priorität: 07.01.2013 AT 122013
(43) Veröffentlichungstag der Anmeldung: 11.11.2015
(73) Patentinhaber: Waizenauer, Dietmar, 4531 Kematen an der Krems (AT); Waizenauer, Bernhard, 4511 Allhaming (AT)
(72) Erfinder: Waizenauer, Dietmar, 4531 Kematen an der Krems (AT); Waizenauer, Bernhard, 4511 Allhaming (AT)
(74) Vertreter: Ellmeyer, Wolfgang
(86) Internationale Anmeldenummer: PCT/AT2014/050002
(87) Internationale Veröffentlichungsnummer: WO 2014/106283

(56) Entgegenhaltungen:
- EP-A1- 1 331 072
- US-A- 2 630 248
- US-A- 4 632 281
- US-B1- 6 755 427

## Beschreibung

Die Erfindung betrifft eine Fördervorrichtung.

Das Fördern von Flüssigkeiten stellt besondere Ansprüche an die Fördervorrichtungen. Sie sollen rasch, effizient und kostengünstig ein genaues Fördern von zumindest einer Flüssigkeit bewerkstelligen können.

Eine Förderanlage entnimmt das Medium aus genormten bzw. standardisierten Behältern, welche der Vorrichtung manuell beigestellt werden. Bei 2-Komponenten-Anwendungen werden vorzugsweise 2 Komponenten mit gemeinsamer Chargen-Nummer zugeführt, welche gemeinsam vermengt und aufgebraucht werden müssen (falls das beigestellte Material durch einen Batch-Prozess hergestellt wurde).

Bislang werden die Behälter einzeln manuell in die Fördervorrichtung eingebracht. Bei beengten Platzverhältnissen und bei dem enormen Gewicht, welches manipuliert werden muss, stößt man an die Grenzen der gesetzlich vorgeschriebenen Belastungen für Arbeitnehmer. Zusätzlich dürfen bei Mehrkomponenten-Anwendungen die Behälter nicht vertauscht werden, da ansonsten die Förderanlage kontaminiert und anschließend aufwendig gereinigt werden muss. Schlauchleitungen können nur schwer gereinigt werden. Diese gilt es anschließend auszutauschen.

Die am Markt befindlichen Förder- bzw. Mischanlagen haben zur Aufnahme der Materialgebinde Gleitschienen oder Einrollvorrichtungen montiert, mithilfe dessen die Behälter in die Fördervorrichtung eingebracht werden. Anschläge in den Vorrichtungen definieren dabei die Position der Behälter. Bei 2-Komponenten-Anlagen muss von beiden Seiten beladen werden, da die Anschläge ein Durchladen von einer Seite verhindern.

Die Materialgebinde werden vom Hersteller auf Holzpaletten angeliefert. Die Gebinde müssen anschließend mit hohem Kraftaufwand auf die Gleitschienen oder Einrollvorrichtungen geschoben werden. Holzpaletten dürfen in einer Reinraum-Produktion oder einer Produktion mit erhöhten Reinheitsanforderungen nicht in die Produktion eingebracht werden. Hier müssen die Fässer umgeladen werden.

Vereinzelt können Fassheber eingesetzt werden, dies ist jedoch abhängig von Bauart und Hersteller der Förderanlage. Ein direktes Einbringen mit einem Hallenkran und einer geeigneten Transportvorrichtung ist in den meisten Fällen nicht möglich, da sich die Förderpumpen über den Fässern befinden und durch diese Störkontur eine Beladung von oben nicht möglich ist.

US 6 755 427 B1 beschreibt eine Vorrichtung zum Transportieren eines Behälters, der viskose Flüssigkeiten enthält, zu einer geeigneten Abfüllanlage. Die Abfüllanlage umfasst eine Übergangsplatte zwischen den Wänden der Abfüllanlage und eine Transportvorrichtung, die über die Übergangsplatte geschoben werden kann. Es ist nur ein Behälter vorgesehen; die Transportvorrichtung verfügt über keine Mittel für eine spezielle Ausrichtung, nur Eingriffselemente.

US 4 632 281 A beschreibt ein Abgabesystem für viskose Flüssigkeiten. Das System umfasst eine Basis, die einen Behälter aufnehmen und zentrieren kann. Mittel zur Verhinderung des Verdrehens um 180° sind nicht vorgesehen.

US 2 630 248 A beschreibt eine Entleerungsvorrichtung für Fässer, die eine Rollvorrichtung zum Einbringen der Fässer umfasst. Die Rollvorrichtung hat an einem Ende eine Haltevorrichtung zum Stoppen des Fasses. Es ist nur ein Fass beschrieben; eine spezielle Ausrichtung ist nicht möglich.

EP 1 331 072 B1 offenbart ein Verfahren für die Steuerung einer Vorrichtung zur Entnahme von flüssigen Materialien mithilfe einer Schöpfkolbenpumpe. Die Schöpfkolbenpumpen werden mit unterschiedlichen Impulsfrequenzen angesteuert. Ein Mittel zur Verhinderung des Vertauschens von Behältern ist nicht vorgesehen.

DE 20 2011 100756 U1 beschreibt eine Entnahmestation für Flüssigkeiten, die einen Entnahmebereich aufweist, in welchem der Behälter angeordnet ist. Der Entnahmebereich weist eine höhenverstellbare Andrückeinrichtung auf, die einen nach unten gebogenen Boden des Behälters nach oben drücken kann. Ein Mittel zur Verhinderung des Vertauschens von Behältern ist nicht vorgesehen.

EP 0 878 439 A1 beschreibt eine Vorrichtung zum Befestigen eines Behälters, die eine Basisplatte und eine darauf fixierte Befestigungsplatte umfasst, die den Behälter fixiert. Ein Verdrehungsschutz ist nicht vorgesehen.

Ziel der vorliegenden Erfindung ist, eine Fördervorrichtung bereitzustellen, bei der eine Zeitersparnis durch einen schnellen Wechsel der Behälter eintritt und dem Bediener beim Wechsel ein geringerer Kraftaufwand und geringerer Handlungsbedarf abverlangt wird.

Erfindungsgemäß wird dies dadurch erreicht, indem eine Fördervorrichtung bereitgestellt wird, die zumindest einen Behälter, in dem sich eine Flüssigkeit befindet und der sich auf einer Palette befindet, und zumindest eine Pumpe zum Befördern der Flüssigkeit umfasst, wobei die Palette in die Fördervorrichtung einbringbar ist und die zumindest eine Pumpe (7) mit einer Folgeplatte (8) verbunden ist und die Folgeplatte (8) in der Höhe verstellbar ist, wobei die Folgeplatte (8) auf der Flüssigkeitsoberfläche aufliegt und dichtend mit dem Behälter (9) abschließt.

Ein mühsames einzelnes Befördern der Behälter zur Fördervorrichtung entfällt. Behälter sind oft nicht mit einem Hubstapler oder einem ähnlichen Hilfsgerät, die normalerweise in einer Produktionshalle vorhanden sind, bewegbar, sondern müssen mühsam mit der Hand bewegt werden. Eine Palette hingegen kann sehr einfach mit einem Hubstapler oder einem ähnlichen Gerät befördert werden. Es entstehen keine Probleme mit dem Arbeitsschutz, und auch weniger kräftige Personen können die Fördervorrichtung bedienen. Es kann z.B. die Palette, auf der die Behälter angeliefert werden, direkt in die Fördervorrichtung eingeschoben werden. Es können mit einem Beförderungsvorgang mehrere Behälter zur Fördervorrichtung zugeführt werden. Der Verfahrensaufwand im Vergleich zu dem einzelnen Befördern der Behälter wird dramatisch vereinfacht. Eine Palette ist definiert als eine flache Konstruktion, die für den Transport von Waren verwendet wird. Als Pumpen kommen beispielsweise Schöpfkolbenpumpen oder Schraubspindelpumpen infrage, aber auch andere Pumpen, die zum Fördern der Flüssigkeiten geeignet sind.

Eine Ausführungsform der Erfindung kann zumindest zwei Behälter, in denen sich jeweils eine Flüssigkeit befindet und die sich auf einer Palette befinden, und zumindest zwei Pumpen zum Befördern der Flüssigkeiten umfassen, wobei die Palette in die Fördervorrichtung einbringbar ist. Diese Ausführungsform eignet sich auch zum Mischen von zumindest zwei Flüssigkeiten, weshalb sie auch als Mischvorrichtung bezeichnet werden kann. Die gleichzeitige Einbringung von zwei oder mehr Behältern auf einer Palette in die Fördervorrichtung vereinfacht das Beladen der Fördervorrichtung, wodurch eine ökonomischere und zeitersparende Beladung der Fördervorrichtung stattfinden kann.

In einer Ausführungsform der vorliegenden Erfindung kann die Palette über eine Fördertechnik eingebracht werden. Dabei wird die Palette im Durchlauf in die Fördervorrichtung geladen. Es können mehrere Paletten auf der Fördertechnik vor und nach der Fördervorrichtung Platz finden. Dadurch kann die Vorbereitung für die Beladung während der Produktion stattfinden. Bei einem Wechsel muss lediglich die eingespannte Palette auf eine Seite ausgerollt werden und auf der anderen Seite eine neue Palette eingerollt werden. Die Fördertechnik und die Palette können so ausgeführt sein, dass eine falsche Ausrichtung der Palette nicht möglich ist. Die Fördertechnik kann so ausgeführt sein, dass diese eine Beladung durch einen Hubwagen zulässt. Die Fördertechnik kann elektrisch angetrieben sein, damit ein vollautomatischer Wechsel der Palette durchgeführt werden kann.

In einer anderen Ausführungsform der vorliegenden Erfindung kann die Fördertechnik eine Rollenbahn, ein Rollengang, Rollenschienen oder ein Förderband sein. Bei einer Rollenbahn und einem Rollengang sind mehrere Rollen hintereinander angeordnet, auf die die Palette gestellt werden kann. Die Palette kann über die Rollen der Rollenbahn und des Rollengangs in die Fördervorrichtung gerollt werden. Bei Rollenschienen sind Rollen auf Schienen angeordnet, d.h. die Fördertechnik besteht aus zumindest zwei Rollenschienen, die voneinander getrennt sind, die aber so angeordnet sind, dass sie eine Palette aufnehmen können und die Palette auf den Rollen in die Fördervorrichtung bewegt werden kann. Ein Förderband ist ein aus elastischem Material ausgebildetes Band, das bewegt werden kann und das eine Palette aufnehmen kann. Allen hier angeführten Fördertechniken ist gemeinsam, dass sie mechanisch, elektrisch oder durch Schwerkraft betrieben werden können und die Palette in die Fördervorrichtung einbringen können. Sie können auch automatisiert sein.

In einer Ausführungsform der Erfindung kann die Palette in genau einer Ausrichtung in die Fördervorrichtung einbringbar sein. Die Palette kann demnach nur in genau einer Ausrichtung in die Fördervorrichtung eingeführt werden. Sind die Behälter auf der Palette einmal korrekt angeordnet, können sie beim Einführen in die Fördervorrichtung nicht mehr verwechselt werden.

In einer Ausführungsform der vorliegenden Erfindung kann die Fördervorrichtung und die Palette eine formschlüssige Verbindung eingehen, die nur in einer Ausrichtung der Palette eingegangen werden kann. Diese formschlüssige Verbindung wird beispielsweise durch einen hervorstehenden Bolzen in der Fördervorrichtung und einen Aufnahmebereich für den Bolzen in der Palette bereitgestellt, wobei der Bolzen nur in einer Richtung einführbar ist. Auf diese Weise kann die Palette nicht in einer verkehrten (falschen) Ausrichtung in die Fördervorrichtung eingeführt werden, wodurch eine falsche Anordnung der Behälter in der Fördervorrichtung verunmöglicht wird. Die formschlüssige Verbindung kann auch eine Störkontur der Palette sein, welche nur bei richtiger Einschubrichtung keine Kollision mit der Förderanlage eingeht.

In einer Ausführungsform der Erfindung kann die Palette eine nach innen zeigende Störkontur und eine nach außen zeigende Störkontur aufweisen, wobei "nach innen zeigend" zum Mittelpunkt der Palette zeigend bedeutet und "nach außen zeigend" von der Außenseite der Palette weg zeigend bedeutet. Diese Störkonturen verunmöglichen das Einschieben der Palette in die Fördervorrichtung in einer falschen Ausrichtung. Die Fördervorrichtung ist so ausgebildet, dass sie die Störkonturen der Palette nur in genau einer Ausrichtung aufnehmen kann, dies allerdings von beiden Richtungen. Es ist somit möglich, die Palette von beiden Seiten der Fördervorrichtung in diese einzuführen, gleichzeitig ist aber ein verkehrtes Einführen, also ein Vertauschen der Behälter in der Fördervorrichtung, nicht möglich. "Störkontur" bedeutet in diesem Zusammenhang, dass die Palette so ausgestaltet ist, dass die Ausgestaltung das Einführen in einer Ausrichtung stört, d.h. die Palette kann nur in einer Ausrichtung eingeführt werden, in welcher die Störkontur so ausgeführt ist, dass sie nicht mit der Fördervorrichtung kollidiert und ein Einführen unmöglich macht.

In einer anderen Ausführungsform der Erfindung kann die Palette eine Zentrierungsvorrichtung zur Arretierung in der Fördervorrichtung aufweisen. Diese Zentrierungsvorrichtung wird auf der Fördervorrichtung eingemessen, wodurch eine exakte Ausrichtung der Palette in der Fördervorrichtung ermöglicht wird und die Pumpen passgenau in die Behälter eingeführt werden können. Die Arretierung kann selbstständig oder mittels Hilfsmittel erfolgen.

In einer Ausbildung der Erfindung kann die Fördervorrichtung eine Zentrierungsvorrichtung für die Palette aufweisen. Die Palette wird so weit in die Fördervorrichtung eingeschoben, bis die Palette an der Zentrierungsvorrichtung der Fördervorrichtung korrekt ausgerichtet ist.

In einer anderen Ausbildung der vorliegenden Erfindung kann die Zentrierungsvorrichtung auf der Palette in die Zentrierungsvorrichtung der Fördervorrichtung formschlüssig eingreifen. Es sind Zentrierungsvorrichtungen sowohl auf der Palette als auch auf der Fördervorrichtung vorgesehen. Die Palette wird in die Fördervorrichtung geschoben, bis die Zentrierungsvorrichtung der Palette in die Zentrierungsvorrichtung der Fördervorrichtung formschlüssig eingreift. Dadurch ist eine exakte Ausrichtung der Palette möglich, wodurch die Pumpen punktgenau in die Behälter eingeführt werden können und der Fördervorgang gestartet werden kann.

In wiederum einer anderen Ausbildung der Erfindung kann die Palette eine Zentrierungsvorrichtung für einen Behälter aufweisen. Ein Behälter wird auf die Palette gestellt und so verschoben, dass er in die Zentrierungsvorrichtung auf der Palette eingepasst wird. Dadurch ist der Behälter punktgenau für die Fördervorrichtung ausgerichtet, und die Pumpe kann ohne Probleme sofort in den Behälter eingeführt werden.

In einer anderen Ausführungsform der Erfindung kann die Palette eine Codierung aufweisen. Diese Codierung gibt an, welcher Inhalt sich in welchem Behälter befindet. Die Codierung kann ein beschreibbarer Datenträger oder durch einen Strichcode, einen zweidimensionalen QR-Code, einen Farbcode oder eine Beschriftung erfolgen. Eine Verwechslung der Behälter in der Fördervorrichtung wird dadurch verhindert. Bei der Kommissionierung der Behälter auf die Palette können alle Behälterdaten auf die Codierung aufgebracht oder eigespielt werden. Diese Daten können von der Förderanlage automatisch oder vom Menschen manuell ausgelesen werden. Diese Daten können zum Beispiel in das Qualitätssicherungsprotokoll der Förderanlage mit aufgenommen werden. Des Weiteren kann eine Fehlbeladung durch falsches Material verhindert werden.

In einer Ausbildung der vorliegenden Erfindung kann die Codierung computerschreibbar und computerlesbar sein. Die Fördervorrichtung weist in diesem Fall ein Lesegerät für den Code auf. Der Code kann ein Strichcode oder ein zweidimensionaler QR-Code sein. Das Lesegerät ist in der Lage, den Code zu lesen und ihn auszuwerten und ihn mit dem Soll-Wert zu vergleichen. Stimmt der Ist-Wert mit dem Soll-Wert überein, gibt das Lesegerät die Fördervorrichtung frei, und das Förderprogramm kann wie programmiert ablaufen. Stimmt der Ist-Wert mit dem Soll-Wert nicht überein, liegt eine offensichtliche Fehl-Anordnung der Behälter auf der Palette vor, und die Inbetriebnahme der Fördervorrichtung wird verhindert. Gleichzeitig kann ein Alarm abgegeben werden.

In einer anderen Ausbildung der Erfindung kann die Codierung vom Menschen lesbar sein. Der Mensch vergleicht den Code mit der Vorgabe und gibt händisch die Fördervorrichtung frei. Der Code kann ein Farbcode, ein spezielles Muster oder einfach eine Beschriftung mit dem Inhalt des Behälters sein.

In einer Ausführungsform der Erfindung kann die Palette die Ausmaße einer genormten Palette aufweisen. Auf diese Weise wird ein einfacher Transport der Palette gewährleistet, der auf genormten Fahrzeugen erfolgen kann. Eine genormte Palette ist beispielsweise eine Europoolpalette (auch Europalette genannt), die durch EN 13698-1 genormt ist und mehrwegfähig ist und die Maße 1200 x 800 x 144 mm (Länge x Breite x Höhe) aufweist. Sie besteht meistens aus Holz.

In einer Ausführungsform der Erfindung kann die Palette zumindest ein Aufnahmefach für Dokumentation aufweisen. In der Palette ist also ein Hohlraum vorhanden, der zur Aufnahme einer Dokumentation geeignet ist. Eine Dokumentation ist z.B. eine Inhaltsangabe, eine Verwendungsangabe, eine Gefahren-Dokumentation oder ähnliches. Die Dokumentation kann gedruckt oder elektronisch auf einem Datenträger vorhanden sein.

In einer Ausbildung der vorliegenden Erfindung kann die Palette sowohl 20-l-Behälter als auch 200-l-Behälter aufnehmen. 20-l-Behälter und 200-l-Behälter sind in der Industrie die gebräuchlichsten Größen. Ist die Palette für diese beiden Größen geeignet, deckt sie den Großteil der anfallenden Förderaufgaben in einem technischen Betrieb ab.

In einer anderen Ausbildung der Erfindung kann die Palette reinraumfähig sein. Fördervorgänge stellen in einigen Situationen hohe Ansprüche an die Reinheit, z.B. in der Lebensmittelindustrie. Diese Fördervorgänge finden in einem Reinraum statt. Wird nun die ganze Palette in den Reinraum eingebracht, muss die Palette selbstverständlich reinraumfähig sein, d.h. sie muss gut abwaschbar sein und desinfizierbar sein, was wiederum bedingt, dass keine Hohlräume vorhanden sein dürfen, in denen sich Krankheitskeime oder andere Verunreinigungen halten können. Holz ist beispielsweise nicht für einen Reinraum geeignet.

In einer Ausführungsform der Erfindung kann die Palette aus Kunststoff, Stahl, verzinktem Stahl oder Edelstahl bestehen. Solche Materialien sind reinraumgeeignet, da sie sich rasch und vollständig reinigen lassen und keine Poren und andere Hohlräume aufweisen, die sehr schwer bis gar nicht zu reinigen sind.

### Kurzbeschreibung der Zeichnungen

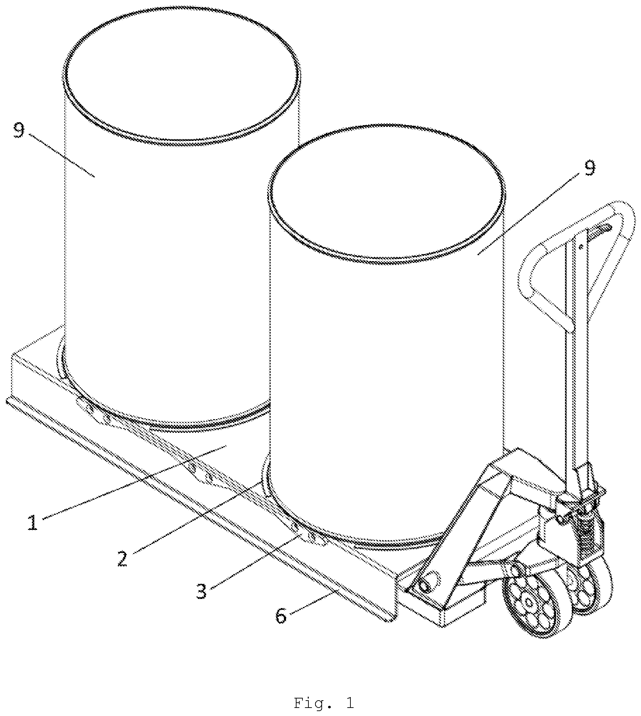

In den Figuren bedeuten die Bezugszeichen Folgendes:
1 Palette
2 Zentrierungsvorrichtung für Behälter auf der Palette
3 X/Y/Z-Zentrierungsvorrichtung für Palette auf der Palette
4 X/Y/Z-Zentrierungsvorrichtung für Palette auf der Fördervorrichtung
5 Störkontur, nach innen zeigend
6 Störkontur, nach außen zeigend
7 Pumpe
8 Folgeplatte
9 Behälter
10 Bodenplatte der Fördervorrichtung
11 Anschlag für Behälter hoch
12 Anschlag für Behälter niedrig
13 Fassbodenunterstützung
14 Beschriftung Palette Seite B
15 Beschriftung Palette Seite A
16 Gleitleisten
17 Hubwagen / Transportmittel
18 Auffahrrampe
19 Feder für Rückstellung Auffahrrampe
20 Codierung der Ausrichtung Seite B
21 Codierung der Ausrichtung Seite A
22 Codierung der Ausrichtung auf Palette
23 X/Y/Z-Zentrierung der Palette auf Bodenplatte
24 Hubzylinder der Fördervorrichtung
Fig. 1 zeigt eine erfindungsgemäße Palette mit zwei Behältern.

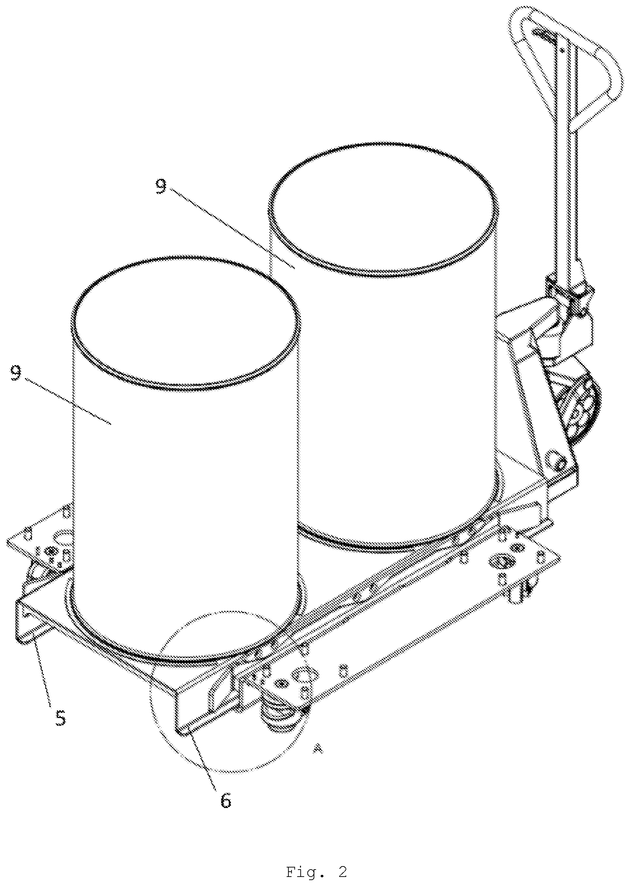

Fig. 2 zeigt eine erfindungsgemäße Palette, die in eine Fördervorrichtung gemäß der Erfindung eingeschoben ist, wobei bei der Fördervorrichtung nur die Bodenplatte dargestellt ist.

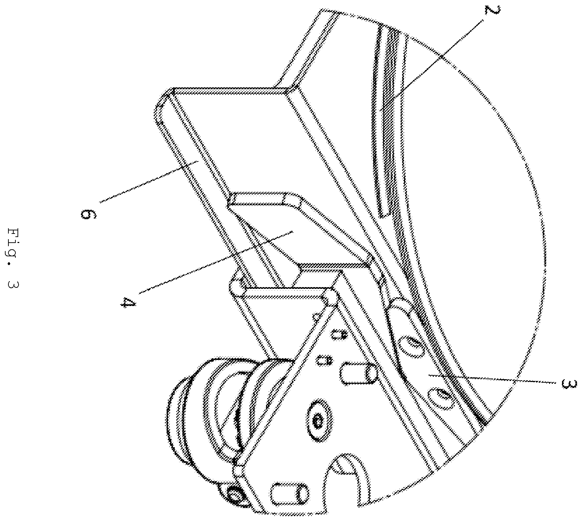

Fig. 3 zeigt einen Ausschnitt aus Fig. 2, in dem die Fixierung und Arretierung der Palette in der Fördervorrichtung erkennbar ist.

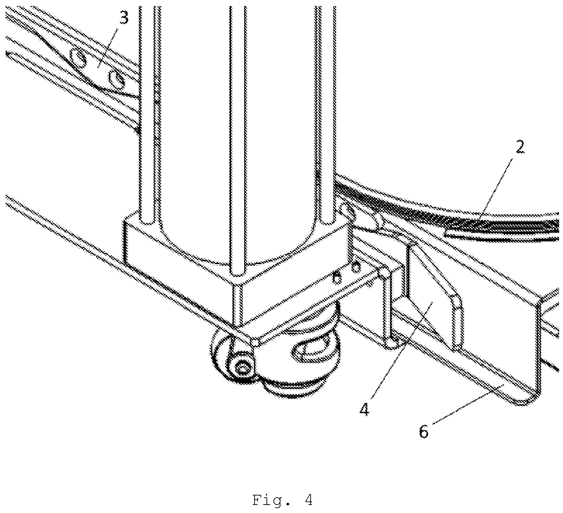

Fig. 4 zeigt einen Ausschnitt einer erfindungsgemäßen Palette, die in eine Fördervorrichtung eingeschoben ist.

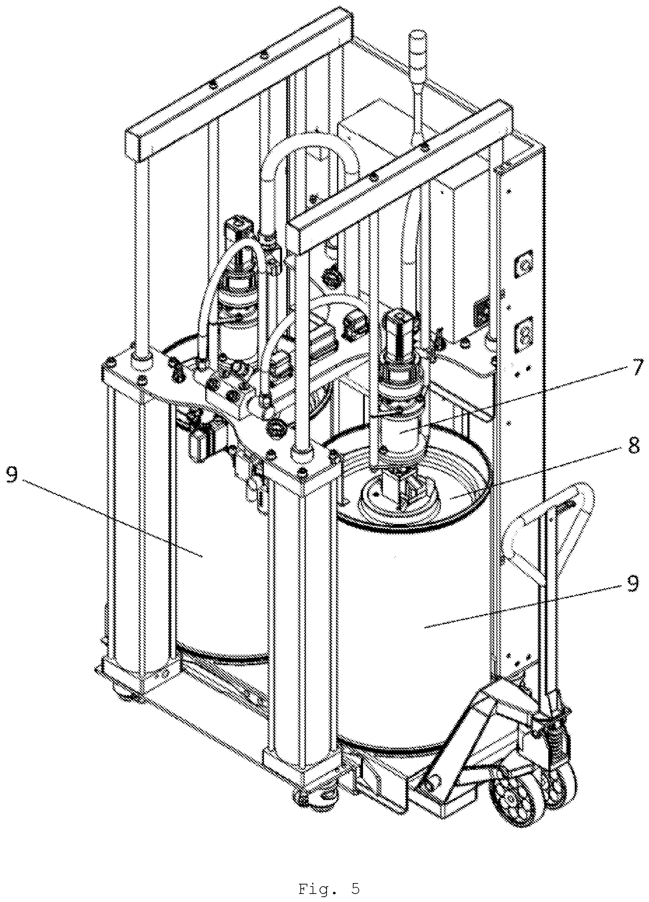

Fig. 5 zeigt eine erfindungsgemäße Palette, die in eine Fördervorrichtung gemäß der Erfindung eingeschoben ist.

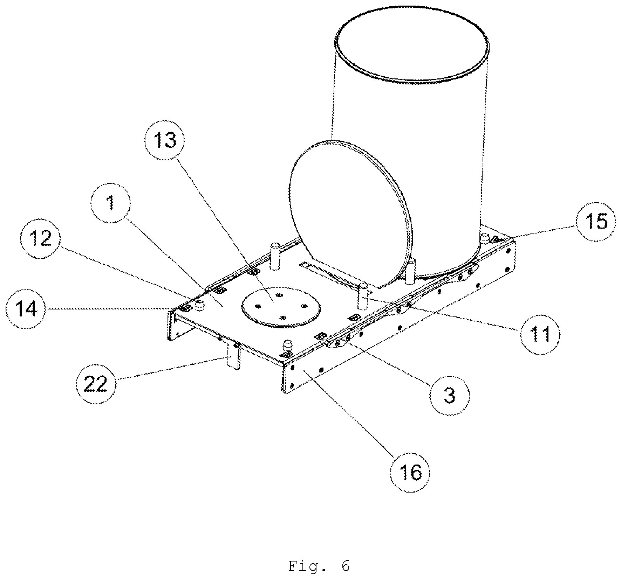

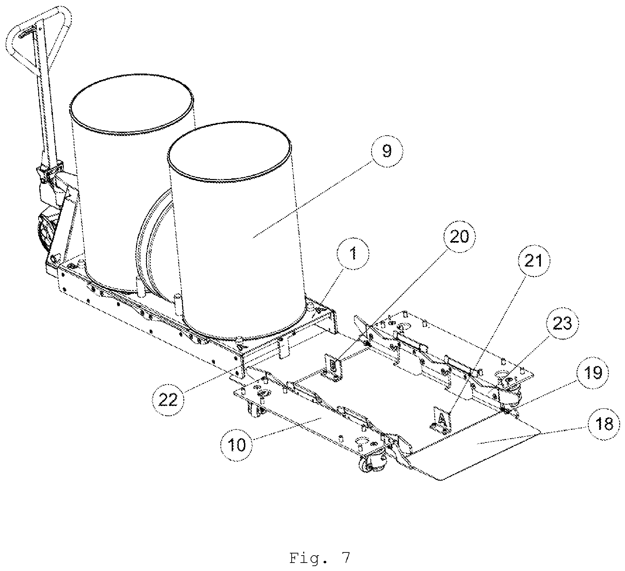

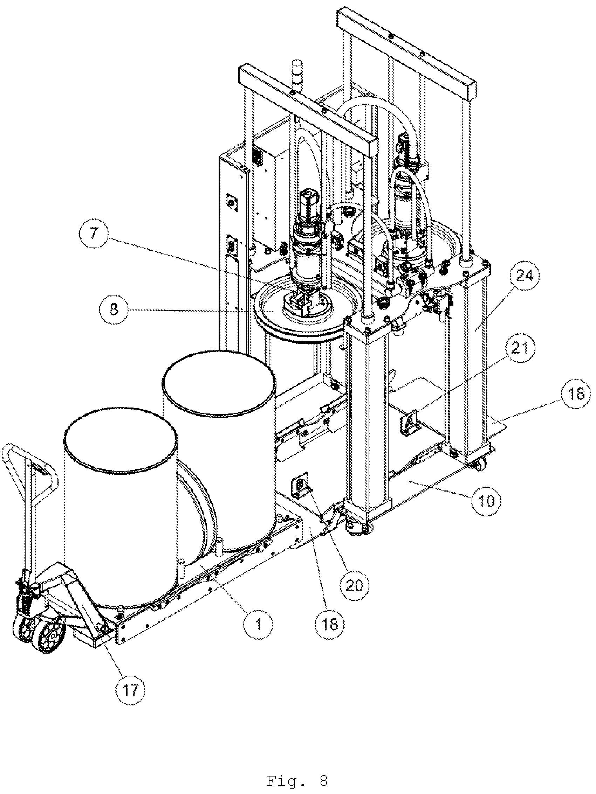

Fig. 6-8 zeigen andere Ausführungsformen der Erfindung.

### BEISPIEL

Eine Fördervorrichtung zum Fördern von Flüssigkeiten umfasst zumindest einen Behälter 9, in dem sich eine Flüssigkeit befindet und der sich auf einer Palette 1 befindet, und zumindest eine Pumpe 7 zum Befördern der Flüssigkeit, wobei die Palette 1 in die Fördervorrichtung einbringbar ist. Die Fördervorrichtung kann auch zumindest zwei Behälter 9, in denen sich jeweils eine Flüssigkeit befindet und die sich auf einer Palette 1 befinden, und zumindest zwei Pumpen 7 zum Befördern der Flüssigkeiten umfassen, wobei die Palette 1 in die Fördervorrichtung einbringbar ist. Eine solche Fördervorrichtung, die zumindest zwei Behälter 9 umfasst, kann zum Mischen der in den Behältern 9 vorhandenen Flüssigkeiten verwendet werden und kann demnach auch als Mischvorrichtung bezeichnet werden. Es können mehrere Behälter 9 auf der Palette 1 vorhanden sein und in einem Beförderungsvorgang in die Fördervorrichtung eingeschoben werden. Wird der Behälter 9 schon auf einer Palette 1 angeliefert, kann diese Palette 1 direkt in die Fördervorrichtung geschoben werden. Der Verfahrensaufwand im Vergleich zu dem einzelnen Befördern der Behälter 9 wird dramatisch vereinfacht. Die Palette 1 kann auch in genau einer Ausrichtung in die Fördervorrichtung einbringbar sein. Dies ist bei mehr als einem Behälter 9 von Bedeutung. Die Behälter 9 sind auf der Palette 1 in der richtigen Anordnung angeordnet. Die Palette 1 kann nun in der einzig möglichen Ausrichtung in die Fördervorrichtung geschoben werden. Eine Verwechslung der Behälter 9 ist somit nicht mehr möglich. Das Einführen der Palette 1 erfolgt von einer Seite, wobei beide Behälter 9 gleichzeitig eingeführt werden. Die Palette 1 wird von einem Hubstapler oder einem ähnlichen Fahrzeug in die Fördervorrichtung eingeführt oder kann wie unten beschrieben über eine Fördertechnik eingeführt werden. Die Pumpen 7 werden in die Behälter 9 eingeführt und können die Flüssigkeit in der gewünschten Menge entnehmen. Gegebenenfalls können die Pumpen 7 auf Folgeplatten 8 angebracht sein, die auf die Behälter 9 bzw. die Flüssigkeitsoberfläche aufgesetzt werden und dichtend mit dem Behälter 9 abschließen. Als Pumpen 7 kommen beispielsweise Schöpfkolbenpumpen oder Schraubspindelpumpen infrage, aber auch andere Pumpen, die zum Fördern der Flüssigkeiten geeignet sind. Die Entnahme der Palette kann von der anderen Seite erfolgen, von der sie eingeführt worden ist.

Die Palette 1 kann über eine Fördertechnik eingebracht werden. Die Fördertechnik kann eine Rollenbahn, ein Rollengang, Rollenschienen oder ein Förderband sein. Bei einer Rollenbahn und einem Rollengang sind mehrere Rollen hintereinander angeordnet, auf die die Palette 1 gestellt werden kann. Die Palette 1 kann über die Rollen der Rollenbahn und des Rollengangs in die Fördervorrichtung gerollt werden. Bei Rollenschienen sind Rollen auf Schienen angeordnet, d.h. die Fördertechnik besteht aus zumindest zwei Rollenschienen, die voneinander getrennt sind, die aber so angeordnet sind, dass sie eine Palette 1 aufnehmen können und die Palette 1 auf den Rollen in die Fördervorrichtung bewegt werden kann. Ein Förderband ist ein aus elastischem Material ausgebildetes Band, das bewegt werden kann und das eine Palette 1 aufnehmen kann. Allen hier angeführten Fördertechniken ist gemeinsam, dass sie mechanisch, elektrisch oder durch Schwerkraft betrieben werden können und die Palette in die Fördervorrichtung einbringen können. Sie können auch automatisiert sein. Die Palette 1 wird im Durchlauf in die Fördervorrichtung geladen. Es können mehrere Paletten 1 auf der Fördertechnik vor und nach der Fördervorrichtung Platz finden. Dadurch kann die Vorbereitung für die Beladung während der Produktion stattfinden. Bei einem Wechsel muss lediglich die eingespannte Palette 1 auf eine Seite ausgerollt werden und auf der anderen Seite eine neue Palette 1 eingerollt werden. Die Fördertechnik und die Palette 1 können so ausgeführt sein, dass eine falsche Ausrichtung der Palette 1 nicht möglich ist. Die Fördertechnik kann so ausgeführt sein, dass diese eine Beladung durch einen Hubwagen zulässt. Die Fördertechnik kann elektrisch angetrieben sein, damit ein vollautomatischer Wechsel der Palette durchgeführt werden kann.

Die Fördervorrichtung kann mit der Palette 1 eine formschlüssige Verbindung eingehen. Es können z.B. Bolzen auf der Fördervorrichtung vorhanden sein, die aus der Fördervorrichtung in den Bereich hineinragen, in den die Palette 1 eingeführt wird, wobei die Palette 1 entsprechende Ausnehmungen aufweist, die die Bolzen aufnehmen können. Die Bolzen können nur in genau einer Richtung von der Palette 1 aufgenommen werden, wodurch eine falsche Ausrichtung der Palette 1 verhindert wird. Analoge und äquivalente Ausführungsformen sind ebenfalls möglich.

In einem Beispiel kann die Palette eine nach innen zeigende Störkontur 5 und eine nach außen zeigende Störkontur 6 aufweisen, wobei "nach innen zeigend" zum Mittelpunkt der Palette 1 zeigend bedeutet und "nach außen zeigend" von der Außenseite der Palette 1 weg zeigend bedeutet. Diese Störkonturen 5, 6 verunmöglichen das Einschieben der Palette 1 in die Fördervorrichtung in einer falschen Ausrichtung. Die Fördervorrichtung ist so ausgebildet, dass sie die Störkonturen 5, 6 der Palette 1 nur in genau einer Ausrichtung aufnehmen kann, dies allerdings von beiden Richtungen. Es ist somit möglich, die Palette 1 von beiden Seiten der Fördervorrichtung in diese einzuführen, gleichzeitig ist aber ein verkehrtes Einführen, also ein Vertauschen der Behälter 9 in der Fördervorrichtung, wenn mehr als ein Behälter 9 auf der Palette 1 vorhanden ist, nicht möglich. "Störkontur" bedeutet in diesem Zusammenhang, dass die Palette 1 so ausgestaltet ist, dass die Ausgestaltung das Einführen in einer Ausrichtung stört, d.h. die Palette 1 kann nur in einer Ausrichtung eingeführt werden, in welcher die Störkontur 5, 6 so ausgeführt ist, dass sie nicht mit der Fördervorrichtung kollidiert und ein Einführen unmöglich macht. Zum Beispiel ist eine Störkontur 5 nach innen gerichtet, zeigt also zum Zentrum der Palette 1, und die andere Störkontur 6 nach außen, zeigt also vom Zentrum der Palette 1 weg. Durch eine entsprechende Ausgestaltung der Fördervorrichtung stört die nach außen gerichtete Störkontur 6 das Einführen in diese in einer Ausrichtung der Palette 1. Wird die Palette 1 umgedreht, befindet sich die nach außen gerichtete Störkontur 6 auf der anderen Seite der Fördervorrichtung, die wiederum so ausgestaltet ist, dass sie die nach außen gerichtete Störkontur 6 aufnehmen kann. Ein falsches Einführen, d.h. ein Vertauschen der Behälter 9, ist mit diesem System unmöglich.

Die Palette 1 kann eine Zentrierungsvorrichtung 3 zur Arretierung in der Fördervorrichtung aufweisen. Diese Zentrierungsvorrichtung 3 wird auf der Fördervorrichtung eingemessen, wodurch eine exakte Ausrichtung der Palette 1 in der Fördervorrichtung ermöglicht wird und die Pumpen 7 passgenau in die Behälter 9 eingeführt werden können. Solch eine Zentrierungsvorrichtung 3 kann beispielsweise aus Löchern in der Seitenwand der Palette 1 bestehen, durch die ein Bolzen oder ein Laserstrahl durchgeführt wird, wodurch eine exakte Positionierung der Palette 1 möglich wird. Die Arretierung kann selbstständig oder mittels Hilfsmittel erfolgen.

Umgekehrt kann auch die Fördervorrichtung eine Zentrierungsvorrichtung 4 für die Palette 1 aufweisen. Die Palette 1 wird so weit in die Fördervorrichtung eingeschoben, bis die Palette 1 an der Zentrierungsvorrichtung 4 der Fördervorrichtung korrekt ausgerichtet ist. Eine Zentrierungsvorrichtung 4 auf der Fördervorrichtung kann ein Metallblech oder ein äquivalentes Leitmedium sein, das die Palette 1 korrekt ausrichtet.

Die Zentrierungsvorrichtung 3 auf der Palette 1 kann in die Zentrierungsvorrichtung 4 der Fördervorrichtung formschlüssig eingreifen. Es sind Zentrierungsvorrichtungen 3, 4 sowohl auf der Palette 1 als auch auf der Fördervorrichtung vorgesehen. Die Palette 1 wird in die Fördervorrichtung geschoben, bis die Zentrierungsvorrichtung 3 der Palette in die Zentrierungsvorrichtung 4 der Fördervorrichtung formschlüssig eingreift. Dadurch ist eine exakte Ausrichtung der Palette 1 möglich, wodurch die Pumpen 7 punktgenau in die Behälter 9 eingeführt werden können und der Fördervorgang gestartet werden kann. Das formschlüssige Eingreifen der Zentrierungsvorrichtung 3 auf der Palette 1 in die Zentrierungsvorrichtung 4 der Fördervorrichtung kann beispielsweise durch ein Ineinandergreifen der beiden Zentrierungsvorrichtungen 3, 4 erfolgen, wobei beide Zentrierungsvorrichtungen 3, 4 komplementär ausgeführt sind, d.h. sich gegenseitig ergänzen, um einen Eingriff zu ermöglichen.

Die Palette kann weiters eine Zentrierungsvorrichtung 2 für einen Behälter 9 aufweisen. Ein Behälter 9 wird auf die Palette 1 gestellt und so verschoben, dass er in die Zentrierungsvorrichtung 2 auf der Palette eingepasst wird. Dadurch ist der Behälter 9 punktgenau für die Fördervorrichtung ausgerichtet, und die Pumpe 7 kann ohne Probleme sofort in den Behälter 9 eingeführt werden.

Ziel ist es, dass die Paletten 1 eine Zentrierung besitzen, mithilfe welcher nach dem Einbringen mit dem Gabelstapler oder Hubwagen in die Fördereinrichtung die Behälter 9 einfach abgelassen werden können und sich arretieren. Die Zentrierung greift bei dem Absenken der Palette 1 auf der Förderanlage in die Palette 1 ein und positioniert diese genau unter den Förderpumpen 7. Durch das Eigengewicht der Palette 1 und des darauf befindlichen Behälters 9 kann diese nach dem Absenken nicht mehr verschoben werden. Somit ist eine exakte schnelle Positionierung möglich.

Um die Behälter 9 bei einer Mehrkomponenten-Förderanlage simultan entleeren zu können, wird in der Regel die Position der Folgeplatte 8 bzw. der Pumpen 7 mit einem Messsystem gemessen. Die Position der Folgeplatten 8 muss referenziert werden, damit bekannt ist, an welcher Position die Behälter 9 komplett entleert sind. Dieser Punkt wird Nullpunkt genannt. Bei Holzpaletten ohne Höhenzentierung bzw. einer gewissen Höhentoleranz kann es vorkommen, dass der Nullpunkt immer unterschiedlich ist und die simultane Fassentleerung beeinflusst wird, da die Nullpunkte von Komponente A und Komponente B nicht gleich sind. Zusätzlich kann es vorkommen, dass herstellerabhängig die Paletten 1 unterschiedliche Abmessungen besitzen. Durch eine Zentrierung der Palette 1 über eine Zentriervorrichtung kann sichergestellt werden, dass der Nullpunkt der Behälter 9 immer der gleiche ist, auch wenn eine baugleiche Palette 1 eingewechselt wird.

Die Palette 1 kann weiters eine Codierung aufweisen, die beispielsweise computerschreibbar oder computerlesbar oder von einem Menschen lesbar ist. Die Codierung kann ein beschreibbarer Datenträger, ein Strichcode, ein zweidimensionaler QR-Code, eine Farbmarkierung oder eine simple Beschriftung sein, die dem Computer bzw. dem Menschen mitteilt, welcher Inhalt sich in welchem Behälter 9 befindet und wie diese zu fördern sind. Die Fördervorrichtung kann gegebenenfalls eine Lesevorrichtung für den Code aufweisen, die einen Ist-Wert mit einem Soll-Wert vergleichen kann und bei Übereinstimmung die Fördervorrichtung freigibt und bei fehlender Übereinstimmung die Fördervorrichtung sperrt. Dabei kann ein Alarm ausgelöst werden. Denselben Vorgang kann auch ein Mensch ausführen. Bei der Kommissionierung der Behälter 9 auf die Palette 1 können alle Behälterdaten auf die Codierung aufgebracht oder eingespielt werden. Diese Daten können von der Förderanlage automatisch oder vom Menschen manuell ausgelesen werden. Diese Daten können zum Beispiel in das Qualitätssicherungsprotokoll der Förderanlage mit aufgenommen werden. Des Weiteren kann eine Fehlbeladung durch falsches Material verhindert werden.

Die Palette 1 kann auch eine Ausnehmung aufweisen, die eine Dokumentation aufweisen kann. Die Dokumentation kann gedruckt sein oder sich auf einem elektronischen Datenträger befinden.

Eine Dokumentation ist z.B. eine Inhaltsangabe, eine Verwendungsangabe, eine Gefahren-Dokumentation oder ähnliches.

Die Behälter 9 können z.B. ein Fassungsvermögen von 20 l oder 200 l aufweisen. Die Palette 1 kann beide Behältergrößen, aber auch andere Behältergrößen aufnehmen. 20 l und 200 l sind Standardmaße in Produktionsbetrieben.

Die Palette 1 ist vorzugsweise reinraumfähig und besteht bevorzugt aus Kunststoff, Stahl, verzinktem Stahl oder Edelstahl. Diese Materialien lassen sich leicht reinigen und sind daher für einen Reinraum geeignet. Im Reinraum werden beispielsweise Lebensmittel gefördert.

In einem anderen Beispiel weist die Fördervorrichtung eine Bodenplatte 10 auf, die eine Codierung der Ausrichtung 20, 21 aufweist. Die Codierung der Ausrichtung 20, 21 ist unterschiedlich für die unterschiedlichen Ausrichtungen, weshalb Codierung 20 sich von Codierung 21 unterscheidet. Es ist der Einschub der Palette 1 in nur einer Ausrichtung möglich. Die Einfahrrichtung in die Fördervorrichtung ist jedoch frei wählbar (von links oder rechts). Die Palette 1 weist eine Codierung 22 der Ausrichtung auf. Diese Codierung 22 greift mit der Codierung 20 bzw. 21 ein und lässt nur eine Ausrichtung der Palette 1 zu. Die Codierung 20, 21 kann einfach ausgeführt sein, indem ein Metallplättchen in einem definierten Abstand von der Längsseite der Bodenplatte 10 normal zur Bodenplatte 10 ausgeführt ist. Die Codierung 22 auf der Palette 1 steht mit dem Abstand der Codierung 20, 21 von der Längsseite der Bodenplatte 10 in Zusammenhang und ist so ausgeführt, dass der Einschub der Palette 1 auf die Bodenplatte 10 in nur einer Ausrichtung möglich ist. In einer Ausrichtung der Palette 1 lässt die Codierung 20 in Zusammenspiel mit der Codierung 22 den Einschub zu, während nach Drehen der Palette 1 um 180° der Einschub durch Zusammenspiel der Codierung 21 mit der Codierung 22 nicht möglich ist. Beim Versuch des Einschiebens der Palette 1 in die Fördervorrichtung bzw. die Bodenplatte 10 stößt die Codierung 21 mit der Codierung 22 zusammen und verhindert dadurch ein Einschieben in dieser Ausrichtung. Die Codierungen 20, 21, 22 sind Ausführungsformen der Störkontur 5, 6.

An der Bodenplatte 10 der Fördervorrichtung kann eine Auffahrrampe 18 vorhanden sein. Diese Auffahrrampe 18 ermöglicht das Aufschieben der Palette 1 auf die Bodenplatte 10. Es können Federn 19 zur Rückstellung der Auffahrrampe in den angehobenen oder abgesenkten Zustand vorhanden sein. Dies dient dazu, dass die Auffahrrampe bei der Manipulation der Fördervorrichtung den Boden nicht berührt und es zu keiner Beschädigung am Hallenboden kommt. Die Zentrierungsvorrichtung 2 für den Behälter 9 auf der Palette 1 kann als niedriger Anschlag 12 für Behälter 9 oder hoher Anschlag 11 für Behälter 9 ausgeführt sein. Diese Anschläge 11, 12 ermöglichen die Zentrierung der Behälter 9 auf der Bodenplatte 10 der Fördervorrichtung. Die Palette 1 kann eine Beschriftung 14, 15 aufweisen, wobei Beschriftung 14 die Beschriftung auf Seite A und Beschriftung 15 die Beschriftung auf Seite B der Palette ist ("Seite A" und "Seite B" soll die unterschiedlichen Seiten der Palette bezeichnen). Die Palette 1 kann Gleitleisten 16 aufweisen, die seitlich angebracht sind und die ein Gleiten der Palette 1 auf dem Boden ermöglichen. Die Bodenplatte 10 kann eine X/Y/Z-Zentrierung 23 für die Palette 1 aufweisen. Diese X/Y/Z-Zentrierung entspricht Zentrierung 4 für die Palette 1 auf der Fördervorrichtung. "X/Y/Z-Zentrierung" bedeutet, dass die Palette in allen drei Raumrichtungen zentriert wird und einen definierten Platz einnimmt.

Die Palette 1 kann mit einem Hubwagen 17 in die Fördervorrichtung transportiert werden.

Ein mögliches Einsatzgebiet liegt bei Förderanlagen für hochviskose Medien im LSR-Spritzguss (LSR steht für "liquid silicone rubber", also flüssigen Siliconkautschuk). Die gebräuchlichste Form der Silikon-Verarbeitung ist die Anwendung im klassischen Spritzgießverfahren im Verbund mit einer Spritzgießmaschine. Hierbei wird das Material im Mischungsverhältnis 1:1 in die Förderschnecke der Spritzgießmaschine dosiert. Diese spritzt das Material in die heiße Form ein. Das Material wird im Batch-Prozess hergestellt. Komponente A und B müssen gemeinsam verbracht werden.

Ein anderes mögliches Einsatzgebiet liegt bei Förderanlagen für den Direkt-Verguss von Silikon. Beim direkten Verguss fördern Bauteile der Vorrichtung ohne Zuhilfenahme einer Spritzgießmaschine das Material direkt in ein Werkzeug. Das Material wird im Batch-Prozess hergestellt. Komponente A und B müssen gemeinsam verbracht werden.

Bei den oben beiden genannten Förderanlagen können auch andere Materialien gefördert werden, wie z.B. Harze und Klebstoffe, Lebensmittel.

Ein weiteres mögliches Einsatzgebiet sind Rammpressen mit Pumpen für unterschiedliche Anwendungen. Als Rammpressen werden Pumpen mit Folgeplatte und Hubzylinder bezeichnet. Es können unterschiedlichste Materialien gefördert werden, wie z.B. Harze und Klebstoffe, Lebensmittel.

## Patentansprüche

1. Fördervorrichtung zum Fördern von Flüssigkeiten, umfassend eine Palette (1), zumindest zwei Behälter (9), in denen sich jeweils eine Flüssigkeit befindet und die sich auf der Palette (1) befinden, und zumindest zwei Pumpen (7) zum Fördern der Flüssigkeiten,
**dadurch gekennzeichnet, dass**
die Fördervorrichtung und die Palette (1) eine formschlüssige Verbindung eingehen, die nur in einer Ausrichtung der Palette (1) eingegangen werden kann, und die zumindest zwei Pumpen (7) mit jeweils einer Folgeplatte (8) verbunden sind und die Folgeplatten (8) in der Höhe verstellbar sind, wobei die Folgeplatten (8) auf der Flüssigkeitsoberfläche aufliegen und dichtend mit dem Behälter (9) abschließen.

2. Fördervorrichtung nach Anspruch 1, **dadurch gekennzeichnet, dass** die Palette (1) eine nach innen zeigende Störkontur (5) und eine nach außen zeigende Störkontur (6) aufweist, wobei "nach innen zeigend" zum Mittelpunkt der Palette (1) zeigend bedeutet und "nach außen zeigend" von der Außenseite der Palette (1) weg zeigend bedeutet.

3. Fördervorrichtung nach Anspruch 1 oder 2, **dadurch gekennzeichnet, dass** die Palette (1) über eine Fördertechnik eingebracht wird.

4. Fördervorrichtung nach Anspruch 3, **dadurch gekennzeichnet, dass** die Fördertechnik eine Rollenbahn, ein Rollengang, Rollenschienen oder ein Förderband ist.

5. Fördervorrichtung nach einem der vorangegangenen Ansprüche, **dadurch gekennzeichnet, dass** die Palette (1) eine Zentrierungsvorrichtung (3) zur Arretierung in der Fördervorrichtung aufweist.

6. Fördervorrichtung nach einem der vorangegangenen Ansprüche, **dadurch gekennzeichnet, dass** die Fördervorrichtung eine Zentrierungsvorrichtung (4) für die Palette (1) aufweist.

7. Fördervorrichtung nach Anspruch 6, **dadurch gekennzeichnet, dass** die Zentrierungsvorrichtung (3) auf der Palette (1) in die Zentrierungsvorrichtung (4) der Fördervorrichtung formschlüssig eingreift.

8. Fördervorrichtung nach einem der vorangegangenen Ansprüche, **dadurch gekennzeichnet, dass** die Palette (1) eine Zentrierungsvorrichtung (2) für einen Behälter (9) aufweist.

9. Fördervorrichtung nach einem der vorangegangenen Ansprüche, **dadurch gekennzeichnet, dass** die Palette (1) eine Codierung aufweist.

10. Fördervorrichtung nach Anspruch 9, **dadurch gekennzeichnet, dass** die Codierung computerschreibbar und computerlesbar ist.

11. Fördervorrichtung nach Anspruch 9, **dadurch gekennzeichnet, dass** die Codierung vom Menschen lesbar ist.

12. Fördervorrichtung nach einem der vorangegangenen Ansprüche, **dadurch gekennzeichnet, dass** die Palette (1) die Ausmaße einer genormten Palette aufweist.

13. Fördervorrichtung nach einem der vorangegangenen Ansprüche, **dadurch gekennzeichnet, dass** die Palette (1) zumindest ein Aufnahmefach für Dokumentation aufweist.

14. Fördervorrichtung nach einem der vorangegangenen Ansprüche, **dadurch gekennzeichnet, dass** die Palette (1) sowohl 20-1-Behälter als auch 200-1-Behälter aufnehmen kann.

15. Fördervorrichtung nach einem der vorangegangenen Ansprüche, **dadurch gekennzeichnet, dass** die Palette (1) reinraumfähig ist.

16. Fördervorrichtung nach einem der vorangegangenen Ansprüche, **dadurch gekennzeichnet, dass** die Palette (1) aus Kunststoff, Stahl, verzinktem Stahl oder Edelstahl besteht.

## Claims

1. A conveying device for conveying liquids, comprising a pallet (1), at least two containers (9), in each of which a liquid is located and which are located on the pallet (1), and at least two pumps (7) for conveying the liquids,
**characterized in that**
the conveying device and the pallet (1) form a form-fit association which can only be formed in one orientation of the pallet (1) and the at least two pumps (7) are connected to a follower plate (8) and the height of said follower plate (8) can be adjusted, the follower plate (8) lying on the liquid surface and closing sealingly with the container (9).

2. The conveying device of Claim 1, **characterized in that** the pallet (1) has an interfering contour facing inwards (5) and an interfering contour facing outwards (6), "facing inwards" meaning facing the center of the pallet (1) and "facing outwards" meaning facing away from the outside of the pallet (1).

3. The conveying device of Claim 1 or 2, **characterized in that** the pallet (1) is introduced via a conveyor system.

4. The conveying device of Claim 3, **characterized in that** the conveyor system is a roller conveyor, a rollerway, roller rails or a conveyor belt.

5. The conveying device of any one of the preceding claims, **characterized in that** the pallet (1) has a centering device (3) for arresting it in the conveying device.

6. The conveying device of any one of the preceding claims, **characterized in that** the conveying device has a centering device (4) for the pallet (1).

7. The conveying device of Claim 6, **characterized in that** the centering device (3) on the pallet (1) engages the centering device (4) of the conveying device in a form-fit manner.

8. The conveying device of any one the preceding claims, **characterized in that** the pallet (1) has a centering device (2) for a container (9).

9. The conveying device of any one of the preceding claims, **characterized in that** the pallet (1) has a coding.

10. The conveying device of Claim 9, **characterized in that** the coding is computer-writeable and computer-readable.

11. The conveying device of Claim 9, **characterized in that** the coding is readable by humans.

12. The conveying device of any one of the preceding claims, **characterized in that** the pallet (1) has the dimensions of a standardized pallet.

13. The conveying device of any one of the preceding claims, **characterized in that** the pallet (1) has at least one receiving compartment for documentation.

14. The conveying device of any one of the preceding claims, **characterized in that** the pallet (1) is able to receive both 20-liter containers and 200-liter containers.

15. The conveying device of any one of the preceding claims, **characterized in that** the pallet (1) is clean-room compatible.

16. The conveying device of any one of the preceding claims, **characterized in that** the pallet (1) is made of plastic, steel, galvanized steel, or stainless steel.

## Revendications

1. Dispositif convoyeur pour convoyer des liquides, comprenant une palette (1), au moins deux récipients (9), dans chacun desquels se trouve un liquide et qui sont disposés sur la palette (1), et au moins deux pompes (7) pour convoyer les liquides,
**caractérisé en ce que** le dispositif convoyeur et la palette (1) forment une liaison par complémentarité des formes, qui peut être formée dans une seule orientation de la palette (1), **en ce que** chacune des au moins deux pompes (7) est reliée avec une plaque suiveuse (8), et **en ce que** les plaques suiveuses (8) sont réglables en hauteur, les plaques suiveuses (8) reposant sur la surface du liquide et butant de manière étanche contre le récipient (9).

2. Dispositif convoyeur selon la revendication 1, **caractérisé en ce que** la palette (1) présente une un contour perturbateur (5) orienté vers l'intérieur ainsi qu'un contour perturbateur (6) orienté vers l'extérieur, «orienté vers l'intérieur» signifiant orienté vers le centre de la palette (1) et «orienté vers l'extérieur» signifiant orienté à l'opposé de la face extérieure de la palette (1).

3. Dispositif convoyeur selon la revendication 1 ou 2, **caractérisé en ce que** la palette (1) est introduite par une technique de convoi.

4. Dispositif convoyeur selon la revendication 3, **caractérisé en ce que** la technique de convoi est une piste à rouleaux, un chemin à rouleaux, des rails à rouleaux ou un convoyeur à bande.

5. Dispositif convoyeur selon l'une quelconque des revendications précédentes, **caractérisé en ce que** la palette (1) présente un dispositif de centrage (3) pour être bloquée dans le dispositif convoyeur.

6. Dispositif convoyeur selon l'une quelconque des revendications précédentes, **caractérisé en ce que** le dispositif convoyeur présente un dispositif de centrage (4) pour la palette (1).

7. Dispositif convoyeur selon la revendication 6, **caractérisé en ce que** le dispositif de centrage (3) sur la palette (1) s'engage dans le dispositif de centrage (4) du dispositif convoyeur par complémentarité des formes.

8. Dispositif convoyeur selon l'une quelconque des revendications précédentes, **caractérisé en ce que** la palette (1) présente un dispositif de centrage (2) pour un récipient (9).

9. Dispositif convoyeur selon l'une quelconque des revendications précédentes, **caractérisé en ce que** la palette (1) présente un codage.

10. Dispositif convoyeur selon la revendication 9, **caractérisé en ce que** le codage peut être écrit et lu par ordinateur.

11. Dispositif convoyeur selon la revendication 9, **caractérisé en ce que** le codage peut être lu par l'homme.

12. Dispositif convoyeur selon l'une quelconque des revendications précédentes, **caractérisé en ce que** la palette (1) présente les dimensions d'une palette normalisée.

13. Dispositif convoyeur selon une des revendications précédentes, **caractérisé en ce que** la palette (1) présente au moins un compartiment pouvant recevoir de la documentation.

14. Dispositif convoyeur selon une des revendications précédentes, **caractérisé en ce que** la palette (1) peut recevoir et des récipients de 20 l et des récipients de 200 l.

15. Dispositif convoyeur selon une des revendications précédentes, **caractérisé en ce que** la palette (1) est adaptée à une salle blanche.

16. Dispositif convoyeur selon une des revendications précédentes, **caractérisé en ce que** la palette (1) est composée de matière plastique, acier, acier zingué ou acier inoxydable.
